# EUROPEAN PATENT SPECIFICATION

(11) **EP 4 238 329 B1**
(45) Date of publication and mention of the grant of the patent: **08.04.2026**
(21) Application number: 21805890.7
(22) Date of filing: 02.11.2021
(51) Int. Cl.: H04W 4/80, H04W 40/20, H04L 45/64, H04L 61/5038, H04L 101/69, H04W 40/22, H04W 84/18, H04L 101/35, H04L 61/5007, H04L 45/74

(54) **A METHOD OF AND A NODE DEVICE FOR RELAYING A MESSAGE IN A NETWORK OF OPERATIVELY INTERCONNECTED NODE DEVICES**
VERFAHREN UND KNOTENVORRICHTUNG ZUM WEITERLEITEN EINER NACHRICHT IN EINEM NETZWERK VON OPERATIV VERBUNDENEN KNOTENVORRICHTUNGEN
PROCÉDÉ ET DISPOSITIF DE NOEUD POUR RELAYER UN MESSAGE DANS UN RÉSEAU DE DISPOSITIFS DE NOEUD FONCTIONNELLEMENT INTERCONNECTÉS

(30) Priority: 02.11.2020 WO PCT/CN2020/125875; 24.12.2020 EP 20217258
(43) Date of publication of application: 06.09.2023
(73) Proprietor: Signify Holding B.V., 5656 AE Eindhoven (NL)
(72) Inventor: FENG, Lei, 5656 AE Eindhoven (NL); KARTHIK, Jaya, 5656 AE Eindhoven (NL)
(74) Representative: Verweij, Petronella Daniëlle
(86) International application number: PCT/EP2021/080312
(87) International publication number: WO 2022/090559

(56) References cited:
- EP-A1- 3 018 978
- WO-A1-2012/140610
- WO-A1-2018/126077

## Description

### Technical Field

The present disclosure generally relates to the field of mesh network and, more specifically, to a method of and a node device for relaying a message from a source node device to a destination node device in a network of operatively interconnected node devices arranged along at least an elongated geographic track.

### Background

Electric or electronic devices, such as lighting devices and Internet of Things, loT, devices including Bluetooth Low Energy, BLE, devices, and devices supporting enhanced Machine-Type Communication, eMTC, for example, all of which comprise data communication capabilities, are frequently deployed in networks comprised of a plurality of interconnected devices.

These devices, generally called node devices or terminal devices, may operate a short range communication interface and a long range communication interface. The short range communication interface, such as a transceiver module, is configured for communication between node devices only, also called inter-node device communication which is normally time critical. The long range communication interface, such as a network adapter or a transceiver module, is configured for data exchange with remote devices, such as a backend server.

The short range communication interface may operate in accordance with a network protocol for exchanging data by networked devices or nodes, such as designated ZigBee^{™}, Bluetooth^{™}, as well as WiFi based protocols for wireless networks, and wired bus networks such as DALI^{™} (Digital Addressable Lighting Interface), DSI (Digital Serial Interface), DMX (Digital Multiplex), KNX (and KNX based systems), and proprietary communication technologies and protocols, for example.

The long range communication interface may operate in accordance with a wireless mobile communication standard, such as designated 2G/3G/4G/5G cellular communication, and other long-range wireless communication technologies like Long Range Wide Area Network, LoRaWAN, and Narrowband loT, NB-loT, or proprietary communication technologies, and/or a wired data exchange communication technology, for example.

One particular networking topology for connecting a plurality of node devices is referred to as mesh network, in which a node device may be connected directly, dynamically and non-hierarchically to as many other node devices within its communication range as possible, with the node devices cooperate with one another to efficiently route data between the node devices.

WO2012140610A1 discloses a type of data packets routing in wireless network for improving network scalability and communication efficiency, in which overlay routing is performed between junction groups comprising at least one node using a position- based routing protocol and underlay routing is performed between nodes of the network using link-based routing.

EP3018978A1 relates to method for setting up a network of luminaires and their subsequent operation. A centre server allocates luminaires into different groups. A group controller is allocated for each group which has long-distance communication with the server and short distance communication with control modules of luminaires within its group. Some of the control modules may include sensors (S1, S2) which provide signals indicative of changes in the environment allowing the network to adapt its operation in accordance with those changes.

WO2018126077A1 discloses an Internet of Things (IoT) network including an orchestrator to issue service management requests, a service coordinator to identify components to participate in the service, and a component to perform a network service element. Messages may be transmitted from one node device to another node device in the mesh network by flooding, which is the forwarding by a relay node of a packet from any node to every other node connected to the relay node except the node from which the packet arrived. Flooding is a way to distribute information such as software updates quickly to every node in a large network.

Conventional flooding strategy in a mesh network does not take into consideration a physical topology of the mesh network. When node devices in a mesh network adopt a substantially linear topology, flooding of messages is not efficient as up to 50% of the system resource may be wasted.

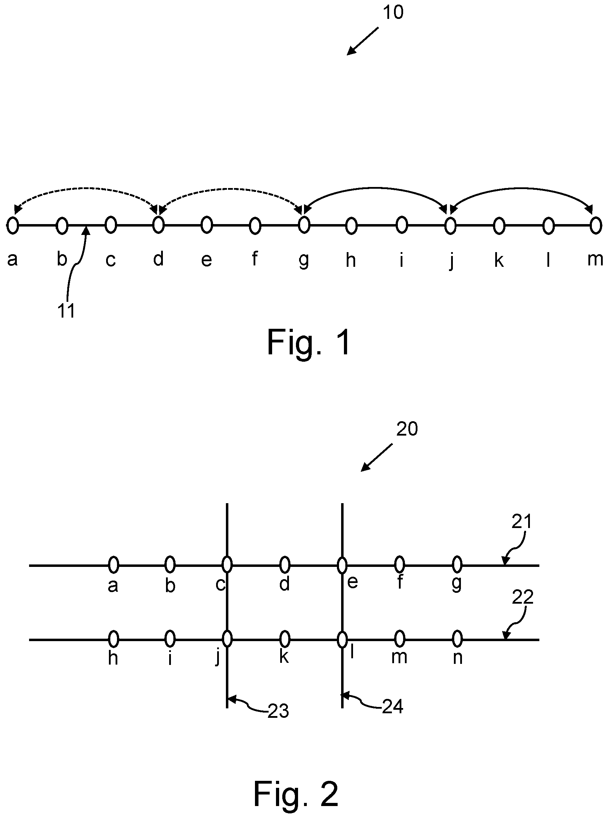

In a simplified example as illustrated in Figure 1, in which a mesh network 10 comprises lighting devices "a" to "m" arranged along a road 11, a node or a lighting device "g" intends to transmit a message to a node or a lighting device "m". Based on the conventional flooding strategy such as managed flooding used in the Bluetooth mesh network, the node 'g' sends the message with a predefined time to live, TTL. Any relay node which receives this message and has not retransmitted this message will relay or transmit the message again, unless the TTL of the message reaches 1. In this scenario, relaying messages in the left part of Figure 1 marked as dashed curves are useless, transmission power of the nodes 'a' to 'f' are therefore wasted and may potentially create interference to the communication of other nodes 'a' to 'f'.

Besides, regulatory requirements in some countries and regions may impose a maximum transmission duty cycle in a network, which has to be considered when designing the network.

Accordingly, there is a need for an improved and more efficient way of relaying a message in a network of operatively interconnected node devices that can optimize relaying decision and system resource usage.

### Summary

In a first aspect of the present disclosure, there is provided a method of relaying a message according to appended independent claim 1 and a thereto corresponding system according to independent claim 11.

The present disclosure is based on the insight that a scheme for relaying messages using flooding technique from a node device to a further node device in a network, in particular, in a mesh network comprising operatively interconnected node devices, may be improved or optimized when physical or geographical locations of the node devices in the network are taken into consideration.

To this end, each node device in the network, when being provisioned, that is, when being configured for information such as a network key and a network address, is assigned or allocated a unique network address that is associated with, related to or based on its geographic location or a layout in the network.

The provisioning of the location-based network address enables a node device with its relay feature enabled and also referred to as a relay node device in this description, upon receiving a message originated from a source node device with a source network address and destined to a destination node device having a destination network address, to make a decision as to whether or not to relay or retransmit the received message. The decision is made based on the relationship between the network addresses of the relay node device, the source network address and the destination address directly without additional information included in the message. The length of the message can thus be greatly reduced, which may result in significant network resource save. This is particularly advantageous for network with limited bandwidth.

Furthermore, the relationship between the network addresses of the relay node device, the source network address and the destination address is decided by simply comparing these network addresses such as their values. Such operation is straightforward and does not require any additional information, such as a geographic map illustrating positions of neighbouring nodes. The method therefore does not involve complex computation for calculating for example positional relationship from GPS coordinates, which is especially suitable for resource constraint node devices.

When a positive decision is made, that is, when the relay node device decides that it should relay the received message, the message is retransmitted by the relay node device, over all outgoing links except for a link that the message arrives, thereby to all other node devices within its communication range in the network. Otherwise, the node device will just drop the message without taking any action.

The above method prevents or avoids unnecessary transmission of messages among the node devices in the network, thereby significantly improving the usage of the system resources and reducing possible interference to the necessary communication between other node devices.

The method is particularly advantageous for a network in which the node devices are deployed or arranged in a substantially linear topology. This is because in such a topology a message is essentially transmitted from the source node to the destination node along a specific direction, which means relay of the message by relay node devices in a direction opposite to the specific direction is unnecessary and should be avoided if possible, which is realised through the method of the present disclosure.

In an example of the present disclosure, a network address provisioned to a node device comprises a group indication representing an elongated geographic track along which the node device is arranged and a location indication representing a location of the node device relative to locations of other node devices arranged along the elongated geographic track.

In some application scenarios, it is required that node devices arranged along an elongated geographic track, such as street lighting devices installed on one side of a street, may not participate in communication between node devices arranged along an adjacent elongated geographic track, such as street lighting devices installed on another side of the same street.

This is realised by provisioning, to a node device, a network address which can represent or reflect both an elongated geographic track along which the node device is arranged, as well as a relative location of the node device, in relation to other node devices along the same elongated geographic track. Such a scheme of allocating or assigning network addresses as utilized by the present disclosure helps to ensure proper relaying of the message to the intended destination, while reducing unnecessary transmission.

In an example of the present disclosure, the location indication is determined based on a plan view or a layout of the network available from a backend server.

It can be contemplated by those skilled in the art that the arrangement of the node devices, along the at least one elongated geographic track in the network, is shown or illustrated in for example a plan view or a layout of a project for constructing the network, which may be saved at the backend server arranged for controlling and managing the node devices. Therefore, the plan view may be used to determine the relative locations of the node devices, which is used for provisioning the network addresses to the node devices.

As such information is readily available from the backend server, it may be easily retrieved and used in the provisioning procedure.

Alternatively, in another example of the present disclosure, each node device comprises a location detection device, wherein the location indication is determined based on geographic locations of the node devices obtained from the location detection devices comprised in the node devices.

Location detection devices, such as Global Positioning System, GPS, devices, included in or attached to the node devices may be used to detect the geographic locations of the node devices and have the same transmitted to for example a provisioner configured for provisioning the node devices at a provisioning stage. When the provisioner has the geographic locations of all node devices available, it may decide the relative locations between the node devices and assign network addresses to the node devices accordingly. This method allows more flexibility, for example when new node devices are added, a network address may be assigned or allocated easily to the new node devices.

In an example of the present disclosure, the geographic locations of the node devices obtained from the location detection devices comprises height indications and a geographic coordinate indications of the node devices, group indications of network addresses provisioned to node devices with a same geographic coordinate indication but different height indications are different.

As an example, a street lighting network may comprise different type of streets, roads, highways and interchanges. A highway or motorway interchange may comprise different levels of roads, all with street lighting devices arranged there-along. The inclusion of height indications of the node devices in the geographic locations obtained by the location detection device allows the node devices along same or similar geographic coordinate indications but at different levels, that is, with different height indications, to be provisioned with network addresses properly reflecting each road and ramp at the interchange, which helps to ensure right routing or relaying of messages along the right road.

In an example of the present disclosure, a group of network addresses provisioned to a group of node devices arranged along a same elongated geographic track increase or decrease monotonically along a direction of the same elongated geographic track.

It can be contemplated by those skilled in the art that the network addresses provisioned to node devices along a same elongated geographic track may comprise numerals or alphabetical characters or combination thereof, which may easily indicate the relative locations of the node devices. This scheme is simple to implement and allows each node device to determine its relationship with the source node and the destination node of the received message easily.

In an example of the present disclosure, the determining step comprises determining to relay the received message when the group indication of the relay network address of the relay node device is the same as the group indication of the source network address and the destination address and the location indication of the relay network address of the relay node device is in-between the location indication of the source network address and the location indication of the destination network address.

The above determining step clearly shows that the relay node device has to relay or retransmit the received message as it is in the transmission direction of the received message. Such relay allows the message to arrive at the intended destination node.

In contrast, if the location indication of the relay network address of the relay node device is not in-between the location indication of the source network address and the location indication of the destination network address, even though the relay node device may share the same group indication as the source and destination node devices, it indicates that the relay node device is not in the transmission direction of the received message and therefore needs not relay the received message, as such transmission is meaningless.

In an example of the present disclosure, the determining step comprises determining to relay the received message when the group indication of the relay network address of the relay node device is the same as the group indication of one of the source network address and the destination network address and different than the group indication of the other one of the source network address and the destination network address.

It is likely that the message may be transmitted along one elongated geographic track, while the destination node device is located at a different elongated geographic track. In this case, a relay node device in vicinity of a junction between the two elongated geographic tracks will notice that its network address has the same group indication as one of the source network address and the destination network address, but different than the group indication of the other one of the source network address and the destination network address. However, the node device still has to relay or retransmit the message under this circumstance.

The inclusion of the group indication therefore helps to resolve the above issue, without incurring any extra computation or operation cost.

In an example of the present disclosure, the determining step comprises determining to relay the received message when the group indication of the relay network address of the relay node device comprises a special indication.

Some "super relay nodes" like nodes at a large cross road is configured with a special group indication, which allows such relay node to relay every messages. This mechanism helps to enhance robustness of the system or network.

In an example of the present disclosure, the relaying step comprises retransmitting the received message using message flooding.

As the node device has made an "informed" decision to relay the received message, which means the retransmission of the received message by the node device is necessary, it can therefore simply have the message relayed by flooding. This helps to the keep the communication protocol of the network unchanged.

In an example of the present disclosure, the network is a Bluetooth mesh network, in particular comprising lighting fixtures arranged along one or more elongated tracks.

The above described method is well suited for being used in a Bluetooth mesh network which uses managed flooding to transmit messages between node devices, especially lighting fixtures. The method as disclosed here helps to reduce useless relaying of the message and therefore improves communication resource usage efficiency and reduces undesired interference.

In a second aspect of the present disclosure, there is provided a node device arranged for relaying a message in a network of operatively interconnected node devices arranged along at least one elongated geographic track, from a source node device, via the node device, to a destination node device, each node device provisioned with a unique network address associated with a geographic location of the node device, the node device comprising:
- a receiving device arranged for receiving a message originated from the source node device having a source network address and destined to a destination node device having a destination network address;
- a determining device arranged for determining to relay the received message, based on a relationship between a network address of the node device and the source network address of the source node device and the destination network address of the destination node device, and
- a relaying device arranged for relaying the message by retransmitting the received message.

The node device is arranged to perform the method as described in the first aspect of the present disclosure.

In an example of the present disclosure, the node device comprises or is attached to a location detection device arranged for detecting the geographic location of the node device.

In a third aspect of the present disclosure, there is provided a computer program product, comprising a computer readable medium storing instructions which, when executed on at least one processor, cause the at least one processor to operate a node device in accordance with the first aspect of the present disclosure.

In a fourth aspect of the present disclosure an electric or electronic device is provided, such as a lighting device, comprising at least one node device according to the second aspect of the present disclosure.

The above mentioned and other features and advantages of the disclosure will be best understood from the following description referring to the attached drawings. In the drawings, like reference numerals denote identical parts or parts performing an identical or comparable function or operation.

### Brief description of the drawings

Fig. 1 schematically illustrated relaying a message according to flooding technique in a mesh network comprises lighting devices arranged along an elongated geographic track.
Fig. 2 illustrates, in a schematic diagram, a network of lighting fixtures respectively arranged along two parallel elongated tracks.
Fig. 3 illustrates, in a simplified flow chart diagram, steps of a method of relaying a message in a network of operatively interconnected node devices arranged along at least one elongated geographic track, in accordance with the present disclosure.
Fig. 4 schematically illustrates a diagram of a unicast address used in the Bluetooth mesh network.
Fig. 5 illustrates, schematically, a diagram of an embodiment of a node device or terminal device arranged for relaying a message in a network of operatively interconnected node device, in accordance with the present disclosure.

### Detailed description

Embodiments contemplated by the present disclosure will now be described in more detail with reference to the accompanying drawings. The disclosed subject matter should not be construed as limited to only the embodiments set forth herein. Rather, the illustrated embodiments are provided by way of example to convey the scope of the subject matter to those skilled in the art.

The present disclosure is detailed below with reference to a network of operatively interconnected lighting devices functioning as node devices of the network, a message is relayed in the network using a flooding technique. Those skilled in the art will appreciate that the present disclosure is not limited to the network of lighting devices, but is applicable for networks of a wide variety of node devices enabled with network communication connectivity, as indicated in the background part.

The terms "node", "node device", "lighting device", "lighting fixture" are used interchangeably in the following description.

Figure 2 illustrates, in a schematic diagram, a network 20 of lighting fixtures "a" to "g" and "h" to "n" respectively arranged along two parallel streets 21 and 22. Two streets 23 and 24 intersecting with the streets 21 and 22 are also shown.

In terms of topology of the network, the lighting fixtures "a" to "g" along the street 21 form a linear topology, so do the lighting fixtures "h" to "n" along the street 22. Flooding is used in the network 20 of Figure 2 to transmit a message from a source node device to a destination node device.

In Figure 2, it is assumed that for example node "b" on street 21 is not in a direct communication range of node "i" on street 22. Therefore, when messages are transmitted between the node devices by way of flooding, nodes "h" to "n" do not participate in the communication between node "d" and node "g" for example.

Moreover, when a message is sent, by flooding, from node "d" to node "g" along the street 21, node "c" should not be involved in the message relay process either, as such transmission is useless.

In some applications, a source node device and a destination node device of a message transmitted via flooding may be located at two different streets, for example, the message is supposed to be transmitted from a node device (not shown) arranged along the street 23 to a further node device arranged along the street 21 of Figure 2. In this case, to ensure that the message will arrive at the intended destination, a lighting device "c" located at the junction of the two streets 21 and 23 should always relay such a message.

The present disclosure provides a solution that helps to optimize relay strategy for messages transmitted by flooding such that requirements or restrictions as described in the background part may be met.

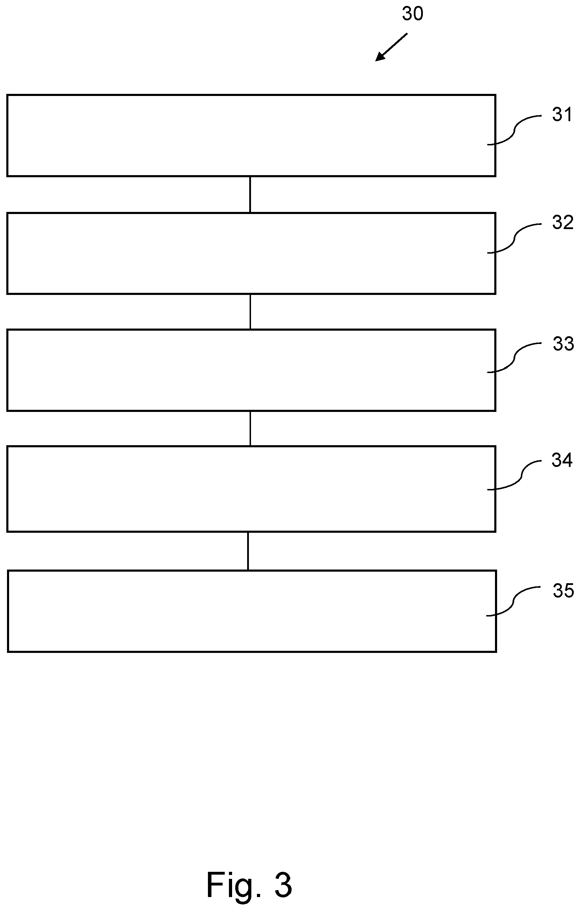

Figure 3 illustrates, in a simplified flow chart diagram, steps of a method 30 of relaying a message in a network of operatively interconnected node devices arranged along at least one elongated geographic track, in accordance with the present disclosure.

At a preparatory phase of the method, node devices in the network are provisioned with a unique network address associated with respective geographic locations of the node devices. The provisioning may comprise a step 31 of a provisioner obtaining geographic locations of the node devices and a step 32 of the provisioner assigning or allocating network addresses to the node devices based on the obtained geographic locations.

The provisioner may be such as an application running on a smart phone or other mobile or portable devices and configured for provisioning the node devices of the network.

Geographic locations of the node devices in the network may be obtained from a plan view or layout of a project for constructing the network, such a plan view may be stored for example at a remote or backend server arranged for managing and controlling the node devices.

Alternatively, the node devices may each comprise a location detection device, such as a Global Positioning System, GPS device, arranged for detecting respective geographic locations of the node devices. The geographic locations of the node devices therefore may be obtained from the location detection devices comprised in the node devices.

The geographic locations obtained by the location detection devices of the node devices may be transmitted to the provisioner for example using provisioning package(s) exchanged between the provisioner and each of the node devices, during the provisioning procedure of the node devices.

It can be contemplated by those skilled in the art that the way of including the obtained geographic locations in a provisioning package varies depending on the communication protocol used. Generally, the obtained geographic locations may be communicated from the node devices to the provisioner by using a reserved field in a provisioning package, adding one or two packages dedicated for location information exchange, or using normal data to send the location information. A node device may then by re-provisioned with a unique network address determined based on the location information.

It is noted that the geographic locations obtained by the location detection devices may also comprise height indications of the respective node devices, which allows the provisioner to differentiate between node devices arranged along different streets running along same direction but at different height levels of for example a highway interchange.

A network address allocated or assigned to a node device is a unique logical identifier of the node device in the network. It can be for example an internet protocol, IP, address in the Ethernet, or a unicast address in a Bluetooth mesh network.

The network address of each node device comprises a location indication representing or reflecting a relative location of the node device along the street. Moreover, to differentiate between node devices arranged along different streets, the network address assigned to the node device also comprises a group indication represents the street along which the node device is arranged.

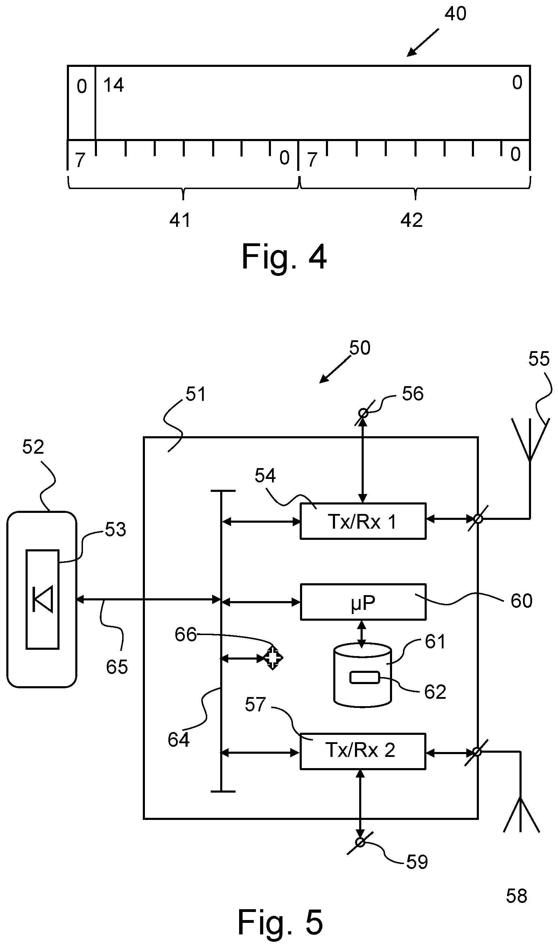

Figure 4 schematically illustrates a diagram 40 of a unicast address used in the Bluetooth mesh network. The unicast address comprises two octet 41 and 41, with bit 15 set to 0. A unicast address may start from 0x0001, and have any value to 0x7FFF.

As an example, addresses allocated to node devices "a" to "g" arranged along the street 21 of Figure 2 may be respectively: 0x0001, 0x0002, 0x0003, 0x0004, 0x0005, 0x0006, 0x0007, and address allocated to node devices "h" to "n" arranged along the street 22 of Figure 2 may be respectively: 0x0101, 0x0202, 0x0103, 0x0104, 0x0105, 0x0106, 0x0107.

In this example, the third digit from the right assigned to the node devices at the street 21 is 0, and the third digit from the right assigned to the node devices at the street 22 is 1, which enables the node devices arranged along different streets to be distinguished from each other.

Moreover, with a group of addresses allocated to the node devices along a same street, the location indication part of the addresses that reflect the relative locations of the node devices along the street vary following a specific order, such as increasingly or decreasingly. This scheme allows a node device, when receiving a unicast message, to determine whether to relay the message or not, based on its own address and the addresses of the source and destination node devices.

It is also possible that certain node devices may function as "super" relay nodes as they have important locations, such as being located at a large cross road. Those node devices may be assigned with a special group indication, which allows the node to relay a received message, for all linked roads, under every circumstances. As an example, a super relay node may have a network address of 0x1001, with the third digit from the lest being 1 indicating that the node device will relay all received message without discrimination.

When the provisioning of the node devices is finished, the node devices can, in a so-called running phase, relay messages in the network based on the method as described below.

In the example of the Bluetooth mesh network, each node is provided with a relay feature. The node device may function as a relay node by enabling its relay feature. The relay node forwards the received message throughout the network. This helps in extending the reach of mesh message to enable large-scale networks.

It can be contemplated by those skilled in the art that in other type of mesh network, a relay node may be designated based on respectively involved technologies.

At step 33, a relay node device receives a message which is originated from a source node device with a source network address and destined to a destination address with a destination network address.

At step 34, the node device determines whether to relay the received message or not. The decision is made based on a relationship between the network address of the relay node device itself and the source and destination network addresses.

For the node devices arranged in a linear topology, the relay node device decides to relay the message when it finds that it is in the direction of the transmission of the message. In other word, if the node device finds that its network address and the source and destination network addresses all have the same group indication, and the location indication of its network address is in between the location indications of the source network address and the destination network address, the relay node device can decide that is in the direction of transmission of the message and should therefore relay the message.

Otherwise, when the relay node device finds that it is not in the direction of transmission of the message, this is when the location indication of its network address is not in between the location indications of the source and destination addresses, even though the group indications of the relay, source and destination addresses are the same. In this case, the relay node device will decide not to relay the message, and the message will be dropped.

On the other hand, it is also possible that the source node device and the destination node device are not located on the same street. In this case, a relay node device located at or close to an junction between the two streets, should always decide to relay the message, to ensure that the message will not be dropped by will be transmitted to the destination node device.

This scenario is reflected as when the group indication of the relay network address of the relay node device is the same as the group indication of one of the source network address and the destination network address and different than the group indication of the other one of the source network address and the destination network address. When faced with such a situation, the node device will determine to relay the message.

For a super relay node device as described above with a special group indication, it can decide to always relay the received message.

At step 35, the relay node device relays the received message based on the decision to relay the message made at step 34.

The message is relayed via flooding, that is, the message received by the relay node device is retransmitted to all available outgoing links, except the link receiving the message.

The message is still relay based on an "informed" decision to relay the message made by the relay node device, which in the network as described herein having a linear topology, can reduce the number of transmission by up to 50%. It therefore significantly reduces the transmission duty cycle of each node device, and optimises communication resource usage.

Figure 5 illustrates, schematically, a diagram of an embodiment of a node device or terminal device 50 arranged for relaying a message in a network of operatively interconnected node device, in accordance with the present disclosure.

The node device 50 comprises a control part or control device 51 and a load such as a lighting fixture or lighting device 52, comprising a lighting module 53, preferably a Light Emitting Diode, LED, lighting module or a plurality of LED lighting modules, operation of which may be controlled by the control device 51 from or through a remote control device, such as a remote or backend server (not shown), for example.

The control device 51 operates a short range communication interface 54, such as a second network adapter or transceiver, Tx/Rx 1, module arranged for short-range wireless 55 or wired 56 exchange of messages or data packets with another node device in the network, i.e. so called inter-node device communication. Network protocols for exchanging data by networked devices or nodes may comprise ZigBee^{™}, Bluetooth^{™}, as well as WiFi based protocols for wireless networks, and wired bus networks such as DALI^{™} (Digital Addressable Lighting Interface), DSI (Digital Serial Interface), DMX (Digital Multiplex), and KNX (or KNX based systems), and other proprietary protocols.

The control device 51 may optionally further operate a long range communication interface 57, such as a first network adaptor or a transceiver, Tx/Rx 2, module, arranged for wireless 58 or wired 59 exchange or data packets with a remote control device or backend server. The long range communication interface 57 typically operates according to a mobile communication system technology in a licensed frequency band, such as 2G/3G/4G/5G cellular communication, and other long-range wireless communication technologies, such as known as Long Range Wide Area Network, LoRaWAN, and Narrowband loT, NB-IoT, communication, for example. However, the long range communication interface 34 may also operate according to a proprietary wireless communication protocol or technology.

The control device 51 further comprises at least one microprocessor, µP, or controller 60, and at least one data repository or storage or memory 61, among others for storing address information 62 of the node device itself and other node devices, including network addresses allocated based on geographic locations of the node devices during the provisioning procedure of the network, and computer program code instructions for operating the node device in accordance with the present disclosure, that is, for relaying messages in the network.

The at least one microprocessor or controller 60 communicatively interacts with and controls the long range communication interface 57, the short range communication interface 54, and the at least one repository or storage 61 via an internal data communication and control bus 64 of the control device 51.

The at least one microprocessor or controller 60 may be functionally considered to comprise a determining device for making the decision as to whether to relay a received message. And the short range communication interface may be functionally considered as a receiving and relay device for receiving a message and relaying the message, based on the decision made by the determining device.

The lighting fixture or lighting device 52 connects 65 to and is controlled from the data communication and control bus 64 by the at least one microprocessor or controller 60.

The node device 50 may further comprise a location detection device 66, which may be comprised in or connected to the node device 60 and arranged for obtaining geographic location information of the node device 60, such that the provisioner may assign or allocate the unique network address to the node device 60 when the network is provisioned.

The present disclosure is not limited to the examples as disclosed above, and can be modified and enhanced by those skilled in the art beyond the scope of the present disclosure as disclosed in the appended claims without having to apply inventive skills and for use in any data communication, data exchange and data processing environment, system or network.

## Claims

1. A method (30) of relaying a message in a network of operatively interconnected node devices arranged along at least one elongated geographic track, from a source node device, via one or more relay node devices, to a destination node device, , the method comprising the steps of:
- assigning network addresses to the node devices based on nodes devices geographic locations, so that each node device provisioned (32) with a unique network address associated with a geographic location of said node device in said network;
- receiving (33), by a relay node device having a relay network address, a message originated from said source node device having a source network address and destined to said destination node device having a destination network address;
- determining (34), by said relay node device, to relay said received message, if it is determined that said relay node device is in the transmission direction of the received message based on a relationship between said relay network address of said relay node device, said source network address of said source node device and said destination network address of said destination node device, and
- relaying (35), by said relay node device, said message by retransmitting said received message.

2. The method according to claim 1, wherein a network address provisioned to a node device comprises a group indication representing an elongated geographic track along which said node device is arranged and a location indication representing a location of said node device relative to locations of other node devices arranged along said elongated geographic track.

3. The method according to claim 2, wherein said location indication is determined based on a plan view or a layout of said network of operatively interconnected node devices available from a backend server.

4. The method according to claim 2, with each node device comprising a location detection device, wherein said location indication is determined based on geographic locations of said node devices obtained from said location detection devices comprised in said node devices.

5. The method according to claim 4, wherein said geographic locations of said node devices obtained from said location detection devices comprise height indications and geographic coordinate indications of said node devices, group indications of network addresses provisioned to node devices with a same geographic coordinate indication but different height indications are different.

6. The method according any of claims 2 to 5, wherein a group of network addresses provisioned to a group of node devices arranged along a same elongated geographic track increase or decrease monotonically along a direction of said same elongated geographic track.

7. The method according to any of the previous claims 2 to 6, wherein said determining step (34) comprises determining to relay said received message when a group indication of said relay network address of said relay node device is the same as a group indication of said source network address and said destination address and a location indication of said relay network address of said relay node device is in-between a location indication of said source network address and a location indication of said destination network address.

8. The method according to any of the previous claims 2 to 6, wherein said determining step (34) comprises determining to relay said received message when said group indication of said relay network address of said relay node device is the same as said group indication of one of said source network address and said destination network address and different than said group indication of the other one of said source network address and said destination network address.

9. The method according to any of the previous claims 2 to 6, wherein said determining step (34) comprises determining to relay said received message when said group indication of said relay network address of said relay node device comprises a special indication.

10. The method according to any of the previous claims, wherein said network is a Bluetooth mesh network.

11. A network system comprising
- a plurality of operatively interconnected node devices arranged along at least one elongated geographic track, and
- a provisioner configured to assign network addresses to the plurality of node devices, wherein the network addresses of the plurality of node devices are determined based on the plurality of nodes devices geographic locations;
wherein each node device is configured to act as a relay node device and comprises:
- a receiving device arranged for receiving a message originated from a source node device having a source network address and destined to a destination node device having a destination network address;
- a determining device arranged for determining to relay said received message, if it is determined that said relay node device is in the transmission direction of the received message based on a relationship between said network address of said node device and said source network address of said source node device and said destination network address of said destination node device, and
- a relaying device arranged for relaying said message by retransmitting said received message.

12. The system according to claim 11, wherein each node device comprises a location detection device (66) arranged for detecting said geographic location of said node device.

13. The system according to claim 11, wherein each node device comprises a lighting fixture.

14. A computer program product, comprising a computer readable medium storing instructions which, when executed on at least one processor, cause said at least one processor to carry out the steps in accordance with the method of any of claims 1 - 11.

## Patentansprüche

1. Verfahren (30) zum Weiterleiten einer Nachricht in einem Netzwerk von funktionell miteinander verbundenen Knotenvorrichtungen, die entlang mindestens einer länglichen geografischen Strecke angeordnet sind, von einer Quellknotenvorrichtung über eine oder mehrere Relaisknotenvorrichtungen zu einer Zielknotenvorrichtung, wobei das Verfahren die Schritte umfasst:
- Zuweisen von Netzwerkadressen zu den Knotenvorrichtungen basierend auf geografischen Standorten der Knotenvorrichtungen, so dass jeder Knotenvorrichtung eine eindeutige Netzwerkadresse bereitgestellt (32) wird, die einem geografischen Standort der Knotenvorrichtung in dem Netzwerk zugeordnet ist;
- Empfangen (33) einer von der Quellknotenvorrichtung mit einer Quellnetzwerkadresse stammenden und für die Zielknotenvorrichtung mit einer Zielnetzwerkadresse bestimmten Nachricht durch eine Relaisknotenvorrichtung mit einer Relaisnetzwerkadresse;
- Bestimmen (34), durch die Relaisknotenvorrichtung, dass die empfangene Nachricht weitergeleitet wird, wenn bestimmt wird, dass sich die Relaisknotenvorrichtung in der Übertragungsrichtung der empfangenen Nachricht befindet, basierend auf einer Beziehung zwischen der Relaisnetzwerkadresse der Relaisknotenvorrichtung, der Quellnetzwerkadresse der Quellknotenvorrichtung und der Zielnetzwerkadresse der Zielknotenvorrichtung, und
- Weiterleiten (35), durch die Relaisknotenvorrichtung, der Nachricht durch erneutes Übertragung der empfangenen Nachricht.

2. Verfahren nach Anspruch 1, wobei eine einer Knotenvorrichtung bereitgestellte Netzwerkadresse eine Gruppenangabe, die eine längliche geografische Strecke repräsentiert, entlang welcher die Knotenvorrichtung angeordnet ist, und eine Standortangabe umfasst, die einen Standort der Knotenvorrichtung relativ zu Standorten anderer Knotenvorrichtungen repräsentiert, die entlang der länglichen geografischen Strecke angeordnet sind.

3. Verfahren nach Anspruch 2, wobei die Standortangabe basierend auf einer Draufsicht oder einem Layout des Netzwerks von funktionell miteinander verbundenen Knotenvorrichtungen bestimmt wird, das von einem Backend-Server verfügbar ist.

4. Verfahren nach Anspruch 2, wobei jede Knotenvorrichtung eine Standorterfassungsvorrichtung umfasst, wobei die Standortangabe basierend auf geografischen Standorten der Knotenvorrichtungen bestimmt wird, die von den in den Knotenvorrichtungen umfassten Standorterfassungsvorrichtungen erhalten werden.

5. Verfahren nach Anspruch 4, wobei die geografischen Standorte der Knotenvorrichtungen, die von den Standorterfassungsvorrichtungen erhalten werden, Höhenangaben und geografische Koordinatenangaben der Knotenvorrichtungen umfassen, wobei Gruppenangaben von Netzwerkadressen, die Knotenvorrichtungen mit derselben geografischen Koordinatenangabe, aber unterschiedlichen Höhenangaben bereitgestellt werden, unterschiedlich sind.

6. Verfahren nach einem der Ansprüche 2 bis 5, wobei eine Gruppe von Netzwerkadressen, die einer Gruppe von Knotenvorrichtungen bereitgestellt werden, die entlang derselben länglichen geografischen Strecke angeordnet sind, entlang einer Richtung der länglichen geografischen Strecke monoton zunehmen oder abnehmen.

7. Verfahren nach einem der vorstehenden Ansprüche 2 bis 6, wobei der Bestimmungsschritt (34) das Bestimmen umfasst, dass die empfangene Nachricht weitergeleitet wird, wenn eine Gruppenangabe der Relaisnetzwerkadresse der Relaisknotenvorrichtung dieselbe ist wie eine Gruppenangabe der Quellnetzwerkadresse und der Zieladresse und eine Standortangabe der Relaisnetzwerkadresse der Relaisknotenvorrichtung zwischen einer Standortangabe der Quellnetzwerkadresse und einer Standortangabe der Zielnetzwerkadresse liegt.

8. Verfahren nach einem der vorstehenden Ansprüche 2 bis 6, wobei der Bestimmungsschritt (34) das Bestimmen umfasst, dass die empfangene Nachricht weitergeleitet wird, wenn die Gruppenangabe der Relaisnetzwerkadresse der Relaisknotenvorrichtung dieselbe ist wie die Gruppenangabe einer der Quellnetzwerkadresse und der Zielnetzwerkadresse und sich von der Gruppenangabe der anderen der Quellnetzwerkadresse und der Zielnetzwerkadresse unterscheidet.

9. Verfahren nach einem der vorstehenden Ansprüche 2 bis 6, wobei der Bestimmungsschritt (34) das Bestimmen umfasst, dass die empfangene Nachricht weitergeleitet wird, wenn die Gruppenangabe der Relaisnetzwerkadresse der Relaisknotenvorrichtung eine spezielle Angabe umfasst.

10. Verfahren nach einem der vorstehenden Ansprüche, wobei das Netzwerk ein Bluetooth-Mesh-Netzwerk ist.

11. Netzwerksystem, umfassend
- eine Vielzahl von funktionell miteinander verbundenen Knotenvorrichtungen, die entlang mindestens einer länglichen geografischen Strecke angeordnet sind, und
- einen Provisionierer, der konfiguriert ist, um Netzwerkadressen an die Vielzahl von Knotenvorrichtungen zuzuweisen, wobei die Netzwerkadressen der Vielzahl von Knotenvorrichtungen basierend auf den geografischen Standorten der Vielzahl von Knotenvorrichtungen bestimmt werden;
wobei jede Knotenvorrichtung konfiguriert ist, um als eine Relaisknotenvorrichtung zu fungieren und umfasst:
- eine Empfangsvorrichtung, die zum Empfangen einer Nachricht angeordnet ist, die von einer Quellknotenvorrichtung mit einer Quellnetzwerkadresse stammt und für eine Zielknotenvorrichtung mit einer Zielnetzwerkadresse bestimmt ist;
- eine Bestimmungsvorrichtung, die eingerichtet ist, um zu bestimmen, dass die empfangene Nachricht weitergeleitet wird, wenn bestimmt wird, dass sich die Relaisknotenvorrichtung in der Übertragungsrichtung der empfangenen Nachricht befindet, basierend auf einer Beziehung zwischen der Netzwerkadresse der Knotenvorrichtung und der Quellnetzwerkadresse der Quellknotenvorrichtung und der Zielnetzwerkadresse der Zielknotenvorrichtung, und
- eine Weiterleitungsvorrichtung, die zum Weiterleiten der Nachricht durch erneutes Übertragen der empfangenen Nachricht angeordnet ist.

12. System nach Anspruch **11,** wobei jede Knotenvorrichtung eine Standorterfassungsvorrichtung (66) umfasst, die zur Erfassung des geografischen Standorts der Knotenvorrichtung angeordnet ist.

13. System nach Anspruch **11,** wobei jede Knotenvorrichtung einen Beleuchtungskörper umfasst.

14. Computerprogrammprodukt, umfassend ein computerlesbares Medium, das Anweisungen speichert, die, wenn sie auf mindestens einem Prozessor ausgeführt werden, den mindestens einen Prozessor veranlassen, die Schritte gemäß dem Verfahren nach einem der Ansprüche 1 bis **11** auszuführen.

## Revendications

1. Procédé (30) permettant de relayer un message dans un réseau de dispositifs de nœud interconnectés de manière opérationnelle agencés le long d'au moins une piste géographique allongée, depuis un dispositif de nœud source, par l'intermédiaire d'un ou plusieurs dispositifs de nœud relais, vers un dispositif de nœud de destination, le procédé comprenant les étapes consistant à :
- attribuer des adresses réseau aux dispositifs de nœud sur la base des emplacements géographiques des dispositifs de nœud, de sorte que chaque dispositif de nœud soit approvisionné (32) avec une adresse réseau unique associée à un emplacement géographique dudit dispositif de nœud dans ledit réseau ;
- recevoir (33), par un dispositif de nœud relais ayant une adresse réseau de relais, un message provenant dudit dispositif de nœud source ayant une adresse réseau source et destiné audit dispositif de nœud de destination ayant une adresse réseau de destination ;
- déterminer (34), par ledit dispositif de nœud relais, de relayer ledit message reçu, s'il est déterminé que ledit dispositif de nœud relais est dans la direction de transmission du message reçu sur la base d'une relation entre ladite adresse réseau de relais dudit dispositif de nœud relais, ladite adresse réseau source dudit dispositif de nœud source et ladite adresse réseau de destination dudit dispositif de nœud de destination, et
- relayer (35), par ledit dispositif de nœud relais, ledit message en retransmettant ledit message reçu.

2. Procédé selon la revendication 1, dans lequel une adresse réseau fournie à un dispositif de nœud comprend une indication de groupe représentant une piste géographique allongée le long de laquelle ledit dispositif de nœud est agencé et une indication d'emplacement représentant un emplacement dudit dispositif de nœud par rapport aux emplacements d'autres dispositifs de nœud agencés le long de ladite piste géographique allongée.

3. Procédé selon la revendication 2, dans lequel ladite indication d'emplacement est déterminée sur la base d'une vue en plan ou d'une disposition dudit réseau de dispositifs de nœud interconnectés de manière opérationnelle disponible à partir d'un serveur dorsal.

4. Procédé selon la revendication 2, avec chaque dispositif de nœud comprenant un dispositif de détection d'emplacement, dans lequel ladite indication d'emplacement est déterminée sur la base d'emplacements géographiques desdits dispositifs de nœud obtenus à partir desdits dispositifs de détection d'emplacement compris dans lesdits dispositifs de nœud.

5. Procédé selon la revendication 4, dans lequel lesdits emplacements géographiques desdits dispositifs de nœud obtenus à partir desdits dispositifs de détection d'emplacement comprennent des indications de hauteur et des indications de coordonnées géographiques desdits dispositifs de nœud, des indications de groupe d'adresses réseau fournies aux dispositifs de nœud avec une même indication de coordonnée géographique, mais des indications de hauteur différentes sont différentes.

6. Procédé selon l'une quelconque des revendications 2 à 5, dans lequel un groupe d'adresses réseau provisionnées à un groupe de dispositifs de nœud agencés le long d'une même piste géographique allongée augmente ou diminue de manière monotone le long d'une direction de ladite même piste géographique allongée.

7. Procédé selon l'une quelconque des revendications précédentes 2 à 6, dans lequel ladite étape de détermination (34) comprend la détermination de relayer ledit message reçu lorsqu'une indication de groupe de ladite adresse réseau de relais dudit dispositif de nœud relais est la même qu'une indication de groupe de ladite adresse réseau source et de ladite adresse de destination et une indication d'emplacement de ladite adresse réseau de relais dudit dispositif de nœud relais est intermédiaire entre une indication d'emplacement de ladite adresse réseau source et une indication d'emplacement de ladite adresse réseau de destination.

8. Procédé selon l'une quelconque des revendications précédentes 2 à 6, dans lequel ladite étape de détermination (34) comprend la détermination de relayer ledit message reçu lorsque ladite indication de groupe de ladite adresse réseau de relais dudit dispositif de nœud relais est la même que ladite indication de groupe de l'une parmi ladite adresse réseau source et ladite adresse réseau de destination et différente de ladite indication de groupe de l'autre parmi ladite adresse réseau source et ladite adresse réseau de destination.

9. Procédé selon l'une quelconque des revendications précédentes 2 à 6, dans lequel ladite étape de détermination (34) comprend la détermination de relayer ledit message reçu lorsque ladite indication de groupe de ladite adresse réseau de relais dudit dispositif de nœud relais comprend une indication spéciale.

10. Procédé selon l'une quelconque des revendications précédentes, dans lequel ledit réseau est un réseau maillé Bluetooth.

11. Système de réseau comprenant
- une pluralité de dispositifs de nœud interconnectés de manière opérationnelle et agencés le long d'au moins une piste géographique allongée, et
- un approvisionneur configuré pour attribuer des adresses réseau à la pluralité de dispositifs de nœud, dans lequel les adresses réseau de la pluralité de dispositifs de nœud sont déterminées sur la base de la pluralité d'emplacements géographiques de dispositifs de nœud ;
dans lequel chaque dispositif de nœud est configuré pour agir en tant que dispositif de nœud relais et comprend :
- un dispositif de réception agencé pour recevoir un message provenant d'un dispositif de nœud source ayant une adresse réseau source et destiné à un dispositif de nœud de destination ayant une adresse réseau de destination ;
- un dispositif de détermination agencé pour déterminer de relayer ledit message reçu, s'il est déterminé que ledit dispositif de nœud relais est dans la direction de transmission du message reçu sur la base d'une relation entre ladite adresse réseau dudit dispositif de nœud et ladite adresse réseau source dudit dispositif de nœud source et ladite adresse réseau de destination dudit dispositif de nœud de destination, et
- un dispositif de relais agencé pour relayer ledit message en retransmettant ledit message reçu.

12. Système selon la revendication 11, dans lequel chaque dispositif de nœud comprend un dispositif de détection d'emplacement (66) agencé pour détecter ledit emplacement géographique dudit dispositif de nœud.

13. Système selon la revendication 11, dans lequel chaque dispositif de nœud comprend un luminaire.

14. Produit programme informatique, comprenant un support lisible par ordinateur stockant des instructions qui, lorsqu'elles sont exécutées sur au moins un processeur, amènent ledit au moins un processeur à réaliser les étapes conformément au procédé selon l'une quelconque des revendications 1 à 11.
